# EUROPÄISCHE PATENTSCHRIFT

(11) **EP 0 527 437 B1**
(45) Veröffentlichungstag und Bekanntmachung des Hinweises auf die Patenterteilung: **27.12.1996**
(21) Anmeldenummer: 92113438.3
(22) Anmeldetag: 06.08.1992
(51) Int. Cl.: G06K 19/077, G06K 19/07

(54) **Datenträger mit integriertem Schaltkreis**
Record carrier with integrated circuit
Support de données à circuit intégré

(30) Priorität: 14.08.1991 DE 4126874
(43) Veröffentlichungstag der Anmeldung: 17.02.1993
(73) Patentinhaber: ORGA Kartensysteme GmbH, 33104 Paderborn (DE)
(72) Erfinder: Blome, Rainer, W-4790 Paderborn-Elsen (DE)
(74) Vertreter: Hanewinkel, Lorenz, Dipl.-Phys.

(56) Entgegenhaltungen:
- EP-A- 0 334 733
- EP-A- 0 359 632
- EP-A- 0 472 768
- PATENT ABSTRACTS OF JAPAN, Band 9, Nr. 102 (E-312), 1985; & JP - A - 59228743

## Beschreibung

Die Erfindung betrifft einen Datenträger in Form einer Ausweiskarte bestehend aus einem aus einem Kunststoff gespritzten Kartenkörper, der eine Aussparung mit einer mittig dazu liegenden Vertiefung aufweist, in der ein Träger, der einen Schaltkreisbaustein trägt, so eingesetzt ist, daß der Schaltkreisbaustein in der Vertiefung angeordnet ist.

Es ist aus DE 36 39 630.3 A1 ein Kartenkörper bekannt, der aus Kunststoff gespritzt ist und eine Aussparung aufweist und mit einem integrierten Schaltkreisbaustein bestückt ist, der auf einem Träger, der äußere Kontaktflächen aufweist, montiert ist, wobei der Träger in der Aussparung mittels eines Heißsiegelklebers verklebt ist. Die Aussparung ist, in der Tiefe stufig enger werdend ausgebildet, so daß der Träger auf dem Stufenabsatz verklebt ist und der kleinere Seitenabmessung aufweisende Schaltkreisbautstein in dem tieferen Ausnehmungsbereich plaziert ist. Die Aussparung umschließt den Träger, der rechteckig aus Streifenmaterial geschnitten ist, in enger Passung.Dieser bekannte gespritzte Kartenkörper weist eine mehrfache Dicke des Trägers auf. Bei einer Reduzierung der Dicke auf die üblicher, aufwendig herzustellender Schichtaufbau-Karten, verbleibt als Abdeckung über dem Schaltkreisbaustein nur eine sehr dünne, empfindliche Kunststoffhaut, und die steilen, rechtwinkligen Kanten und Absätze, die einen großen Teil der Kartendicke durchsetzen, erbringen extrem hohe Kerbspannungen, wenn die Karte einer Biegebelastung ausgesetzt wird. EP-A-0 334 733 zeigt einen Kartenkörper bei der die Vertiefung gerundete Kanten aufweist.

Es ist Aufgabe der Erfindung, eine Datenträgerkarte mit gespritztem Kartenkörper zu offenbaren, der geringfügig dicker als der Schaltkreisträger mit dem Schaltkreis ist und einen erhöhten Schutz des Schaltkreises sowie eine erhöhte Festigkeit bezüglich einer Biegebeanspruchung erbringt.

Die Lösung der Aufgabe besteht darin, daß der Kartenkörper im Bereich der Vertiefung eine durchgehend gewölbte Oberfläche aufweist und die Aussparung eine Aussparungstiefe von etwa 1/4 bis 1/3 einer Kartendicke (DK) aufweist und der Kartenkörper an der tiefsten Stelle der Vertiefung eine Restdicke aufweist, die etwa 1/4 bis 1/3 der Kartendicke entspricht.

Vorteilhafte Ausgestaltungen sind in den Unteransprüchen angegeben.

Gewöhnlich ist der Schaltkreisträger mit einem Heißsiegelkleber in der Vertiefung fixiert.

Die Vertiefung, die zur Aufnahme des Schaltkreisbausteines mit seiner kuppenförmigen Abdeckung dient, ist etwa kugelkalottenförmig oder ellipsoidisch ausgestaltet. Dies bringt genügend Raum für den Schaltkreis und vermeidet steile Kanten an der Ausnehmung, an denen Kerbspannungen auftreten können. Die Restdicke des Materials beträgt in Zentralbereich der Vertiefung wenige Zehntel Millimeter, was jedoch für die benötigte Abdeckfestigkeit deshalb ausreicht, da dieser sehr dünne Bereich nur etwa 2 mm Durchmesser hat.

Eine weitere vorteilhafte Ausgestaltung ist durch die Rundungen der Eckbereiche des Trägers und der Aussparung gegeben, da dadurch die Kerbspannungen verringert werden. Weiterhin ist in die Randzone der Aussparung eine umlaufende Rille eingebracht, die einen gerundeten Querschnitt aufweist und in den Eckbereichen die Rundungen durchläuft, so daß in allen Richtungen sanfte Krümmungen zum Abbau von Spannungen vorliegen. Die umlaufende Rille hat den Vorteil, daß sie überschüssigen Klebstoff während des Heißsiegelvorganges aufnimmt, wodurch ein völlig ebenes Aufliegen des Trägers auf dem Klebstoffilm sichergestellt wird und ein Aufsteigen des Klebstoffes vermieden wird, was zu einer schädlichen Kontaminierung der Kontaktflächen oder der Lesegerätkontakte führen könnte.

Der Stufenabsatz der Aussparung ist vorteilhaft mit einer Aufrauhung versehen, die in die Spritzform durch Sandstrahlen eingebracht ist. Diese Aufrauhung verbessert den Halt der Klebung.

Das Material des Kartenkörpers ist in bekannter Weise Polyvinylchlorid, ABS oder Polykarbonat.

Der Träger des Schaltkreisbausteines ist wie üblich aus Polyester- oder Polyimidfolie oder GFK-folie, das ist Glasfaserfolie, hergestellt. Die Rundungen der Eckbereiche entstehen beim Ausstanzen des Trägerkörpers. Auf dem Trägerkörper befinden sich, wie üblich, die vergoldeten Kontakte.

Vorteilhafte Ausgestaltungen sind in den Figuren 1 bis 3 dargestellt.
- Fig. 1: zeigt eine Aufsicht auf einen Kartenkörper;
- Fig. 2: zeigt einen Schnitt II-II vergrößert durch eine erste Ausführung einer Karte;
- Fig. 3: zeigt einen Schnitt II-II vergrößert durch eine zweite Ausführung eines Kartenkörpers.

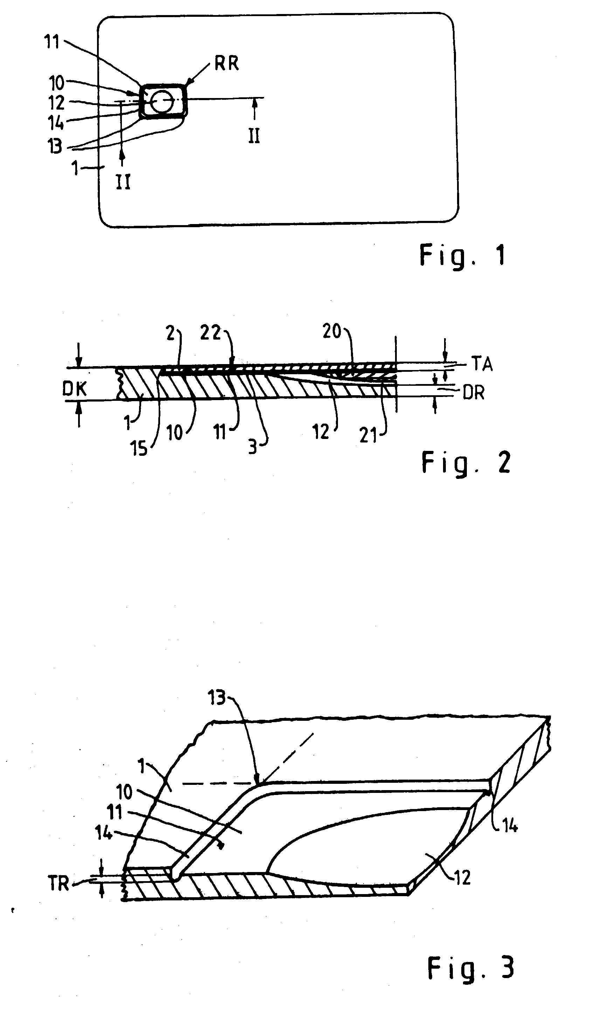

In der Aufsicht des Kartenkörpers (1) der Datenträgerkarte in Fig.1, die genormte Abmessungen hat, ist eine Aussparung (10) für die Einbringung eines Trägers eines Schaltkreisbausteines mit seinen Kontaktflächen in genormter Lage bezüglich der Kartenränder angeordnet. Mittig in der Aussparung (10) ist eine kalottenförmige Vertiefung (12) eingebracht. Die Eckbereiche der Aussparung (10) weisen Rundungen (13) auf. Allseitig läuft eine Rille (14) auf dem Stufenabsatz (11) der Aussparung (10) um. Der Stufenabsatz (11) ist angerauht, so daß er guten Kleberkontakt bietet.

Fig. 2 zeigt einen Schnitt II-II vergrößert durch einen Kartenkörper (1) mit dem eingebrachten Träger (2) mit dem Schaltkreisbaustein (20), der von einer konvex gewölbten Schaltkreisabdeckung (21) überzogen ist. An der Oberfläche trägt der Träger (2) vergoldete Kontaktflächen (22), die plan mit der Oberfläche des Kartenkörpers (1) abschließen.

Die gesamte Kartendicke (DK) ist geringer als 1 mm, z.B. 0,82 mm. Der Träger (2) entspricht in seiner Dicke zusammen mit einem, insbesondere heißsiegelbaren, Klebstoffilm (3) der Aussparungstiefe (TA), die etwa 1/4 bis 1/3 der Kartendicke (DK) beträgt. Von dem Stufenabsatz (11) der Aussparung (10) aus erstsreckt sich die konkav gerundete Vertiefung (12) über etwa die halbe Kartendicke (DK), so daß eine Kartematerialrestdicke (DR) von ca. 1/4 bis 1/3 der Kartendicke (DK) im tiefsten Punkt der Vertiefung (12) verbleibt. Die gewölbte Form der Vertiefung (12) erbringt eine relativ hohe Festigkeit der Abdeckung des Schaltkreisbausteines (20) und ausreichend Platz für diesen. Der Träger (2) ist paßgenau zu der Aussparung (10) gestanzt, so daß ein minimaler Passungsspalt (15) entlang der seitlichen Ausnehmungswandung vorhanden ist.

Fig. 3 zeigt vergrößert einen Schnitt II-II mit einer perspektivischen Darstellung des anschließenden Bereiches für eine weitere vorteilhafte Ausgestaltung des Kartenkörpers (1). Die Aussparung (10) weist in den Eckbereichen Rundungen (13) auf, deren Rundungsradius (RR) etwa der doppelten Kartendicke (DK) entspricht. Die Aussprung (10) weist umlaufend entlang ihres äußeren Randes eine Rille (14) auf, die etwa halbkreisförmig konkav profiliert ist und deren Rillentiefe (TR) etwa der halben Aussparungstiefe (TA) entspricht. Diese Rille hat einerseits die Funktion, als Aufnahme für überschüssigen Klebstoff zu dienen, wenn bei dem Heißsiegelvorgang der mit dem Klebstoffilm beschichten Träger bündig mit der Kartenoberfläche in die Aussparung eingepreßt wird .Es erübrigt sich eine kleiner als der Träger zugeschnitte Schmelzkleberfolie zentrisch auf den Träger vor dessen Einsetzen in die Aussparung aufzubringen.

Weiterhin ergibt sich durch die Rille (14) in Verbindung mit der Rundung (13) ein allseitig gerundeter Eckbereich, der die Spannungen bei einer Biegebeanspruchung der Karte verteilt und ein Einreißen in Fortsetzung der Ausnehmungskanten, entlang einer der gestrichelt gezeichneten Linien verhindert.

## Patentansprüche

1. Datenträger in Form einer Ausweiskarte bestehend aus einem aus einem Kunststoff gespritzten Kartenkörper (1), der eine Ausparung (10) mit einer mittig dazu liegenden Vertiefung (12) aufweist, in der ein Träger (2), der einen Schaltkreisbaustein (20) trägt, so eingesetzt ist, daß der Schaltkreisbaustein (20) in der Vertiefung (12) angeordnet ist,
dadurch gekennzeichnet, daß der Kartenkörper (1) im Bereich der Vertiefung eine durchgehend gewölbte Oberfläche aufweist und die Aussparung (10) eine Aussparungstiefe (TA) von etwa 1/4 bis 1/3 einer Kartendicke (DK) aufweist und der Kartenkörper (1) an der tiefsten Stelle der Vertiefung (12) eine Restdicke (DR) aufweist, die etwa 1/4 bis 1/3 der Kartendicke entspricht.

2. Datenträger nach Anspruch 1, dadurch gekennzeichnet, daß die Vertiefung (12) etwa kugelkalottenförmig oder ellipsoidisch ausgebildet ist.

3. Datenträger nach Anspruch 2, dadurch gekennzeichnet, daß die Aussparung (10) allseitig um die Vertiefung (12) einen Stufenabsatz (11) aufweist, der mit einer Aufrauhung versehen ist.

4. Datenträger nach Anspruch 3, dadurch gekennzeichnet, daß der Stufenabsatz (11) entlang des äußeren Randbereiches umlaufend eine konkave Rille (14) aufweist.

5. Datenträger nach Anspruch 4, dadurch gekennzeichnet, daß die Rille (14) eine Rillentiefe (TR) aufweist, die etwa der halben Aussparungstiefe (TA) entspricht, und die Rille (14) etwa einen halbkreisförmigen Querschnitt aufweist.

6. Datenträger nach einem der vorstehenden Ansprüche, dadurch gekennzeichnet, daß die Ausnehmung (10) etwa rechteckig ist und in ihren Eckbereichen Rundungen 13) aufweist.

7. Datenträger nach Anspruch 6, dadurch gekennzeichnet, daß die Rundungen (13) einen Rundungsradius (RR) aufweisen, der etwa der doppelten Kartendicke (DK) entspricht.

8. Datenträger nach einem der vorstehenden Ansprüche, dadurch gekennzeichnet, daß der Träger (2) eine gestanzte Außenkontur aufweist, die mit einer engen Passung der Form der Aussparung (10) entspricht.

9. Datenträger nach einem der vorstehenden Ansprüche, dadurch gekennzeichnet, daß der Träger (2) in der Vertiefung (12) mit einem Heißsiegelkleber (3) gehalten ist.

## Claims

1. A data carrier in the form of an identity card consisting of an injection moulded card (1) made from a plastic material which has a recess (10), with a depression (12) in the centre of the recess (2), into which is inserted a support, with a circuit module (20), in such a manner that the circuit module (20) is located in the depression (12), characterised in that the card (1) has a curved surface over the whole area of the depression and the recess (10) has a recess depth (TA) of about 1/4 to 1/3 the thickness of the card (DK) and the card (1) at the deepest point in the depression (12) has a residual thickness (DR) which corresponds to about 1/4 to 1/3 the thickness of the card.

2. A data carrier according to Claim 1, characterised in that the depression (12) is designed to be an approximately spherical dome or an ellipsoid.

3. A data carrier according to Claim 2, characterised in that the recess (10) has a stepped shoulder (11) running all round the depression (12), which is provided with a roughened surface.

4. A data carrier according to Claim 3, characterised in that the stepped shoulder (11) has a concave groove (14) running all round the outer regions of the edge.

5. A data carrier according to Claim 4, characterised in that the groove (14) has a depth (TR) which corresponds to about half the depth of the recess (TA) and the groove (14) has an approximately semicircular cross-section.

6. A data carrier according to one of the preceding Claims, characterised in that the recess (10) is approximately rectangular and has curves (13) at the corners.

7. A data carrier according to Claim 6, characterised in that the curves (13) have a radius of curvature (RR) which is about twice the thickness of the card (DK).

8. A data carrier according to one of the preceding Claims, characterised in that the support (2) has a punched out external contour which corresponds to a close fit with the shape of the recess (10).

9. A data carrier according to one of the preceding Claims, characterised in that the support (2) is held in the depression (12) with a heat-sealing adhesive (3).

## Revendications

1. Support de données en forme de carte d'identité composé d'un corps de carte (1) en matière plastique moulé par injection et présentant un évidement (10) avec une cavité (12) disposée centralement, dans laquelle un support (2) avec circuit de commutation (20) est mis en place,
caractérisé en ce que
le corps de carte (1) présente, dans la zone de la cavité, une surface voûtée en continu et que l'évidement (10) a une profondeur (TA) correspondant à environ ¼ à 1/3 d'une épaisseur de carte (DK) et que l'épaisseur restante (DR) du corps de carte (1), à l'endroit le plus profond de la cavité (12) correspond à environ ¼ à 1/3 de l'épaisseur de la carte.

2. Support de données selon la revendication 1,
caractérisé en ce que
la cavité (12) présente une forme semi-sphérique ou ellipsoïdale.

3. Support de données selon la revendication 2,
caractérisé en ce que
l'évidement (10) présente de tous côtés de la cavité (12) un gradin (11) pourvu d'une surface rugueuse.

4. Support de données selon la revendication 3,
caractérisé en ce que
le gradin (11) présente une rainure concave (14) continue, le long de la zone marginale extérieure.

5. Support de données selon la revendication 4,
caractérisé en ce que
la rainure (14) a une profondeur (TR) correspondant à peu près à la moitié de la profondeur (TA) de l'évidement et que la section transversale de la rainure (14) est en forme de demi-cercle.

6. Support de données selon l'une des revendications précédentes,
caractérisé en ce que
l'évidement (10) est à peu près rectangulaire et présentent dans ses zones d'angles des arrondis (13).

7. Support de données selon la revendication 6,
caractérisé en ce que
les arrondis (13) ont un rayon (RR) qui correspond environ au double de l'épaisseur de carte (DK).

8. Support de données selon l'une des revendications précédentes,
caractérisé en ce que
le support (2) est découpé de sorte que son contour extérieur soit étroitement ajusté à la forme de l'évidement (10).

9. Support de données selon l'une des revendications précédentes,
caractérisé en ce que
le support (2) est fixé dans la cavité (12) à l'aide d'une colle thermosoudable (3).
